# EUROPÄISCHE PATENTSCHRIFT

(11) **EP 0 646 898 B1**
(45) Veröffentlichungstag und Bekanntmachung des Hinweises auf die Patenterteilung: **14.07.1999**
(21) Anmeldenummer: 94114234.1
(22) Anmeldetag: 09.09.1994
(51) Int. Cl.: G07F 7/10

(54) **System zur Durchführung von Transaktionen mit einer Multifunktionskarte mit elektronischer Börse**
System to effect transactions with a multi-functional card provided with an electronic wallet
Système pour effectuer des transactions avec une carte multi-fonctions, muni d'un porte-monnaie électronique

(30) Priorität: 30.09.1993 DE 4333388
(43) Veröffentlichungstag der Anmeldung: 05.04.1995
(73) Patentinhaber: Giesecke & Devrient GmbH, 81677 München (DE)
(72) Erfinder: Rankl, Wolfgang, D-94258 Frauenau (DE); Weiss, Dieter, D-88145 Hergatz (DE)
(74) Vertreter: Klunker . Schmitt-Nilson . Hirsch

(56) Entgegenhaltungen:
- EP-A- 0 058 029
- WO-A-90/15382
- DE-A- 4 243 851

## Beschreibung

Die Erfindung betrifft ein Verfahren gemäß dem Oberbegriff des Hauptanspruchs, sowie eine Vorrichtung zu seiner Durchführung.

Allgemein bekannt sind Karten, wie z. B. ec-Karten, Kreditkarten oder Telefonkarten mit integriertem Schaltkreis, die dem Benutzer für unterschiedliche Transaktionen zur Verfügung stehen. Die ec-Karten bzw. die Kreditkarten werden in zunehmendem Maß auch dazu verwendet, bargeldlose Transaktionen vom benutzereigenen Bankkonto auf ein beliebiges anderes Bankkonto zu veranlassen. Es handelt sich dabei im allgemeinen um Dienstleistungsanbieter oder Händler, die über ein entsprechnedes Terminal verfügen, das der Kartenbenutzer zur Durchführung der Transaktionen benutzt.

Eine weitere Art der bargeldlosen Bezahlung bietet die sogenannte elektronische Börse. Um die Börse zu aktivieren, leistet der Kartenbenutzer eine Vorabzahlung an den Börsenanbieter und erhält dafür eine entsprechende Anzahl von Werteinheiten, die in der elektronischen Börse gespeichert werden. Bei jeder Inanspruchnahme einer Leistung wird die Börse um einen entsprechenden Betrag vermindert.

Aufgrund der zunehmenden Leistungsfähigkeit der in Karten eingesetzten integrierten Schaltkreise verstärken sich die Bestrebungen, sogenannte Multifunktionskarten vorzuschlagen, die es dem Benutzer erlauben, mit einer einzigen Karte die genannten Transaktionsarten (Bankanwendung, Börsenanwendung) zu nutzen.

Typische Multifunktionskarten verfügen über eine der kontoführenden Bank des Benutzers zugeordnete Bankanwendung sowie wenigstens eine einem Dienstanbieter oder Händler zugeordnete Börsenanwendung.

Eine derartige Multifunktionskarte mit Börsenfunktion ist aus der EP-OS 605 070 bekannt, die allerdings nur im Sinne von Art. 54 (3) EPÜ relevant ist.Darin ist ein Verfahren zum Betrieb einer Multifunktionskarte beschrieben, wobei der Bankanwendung zunächst ein umzubuchender Geldbetrag mitgeteilt wird, die Bankanwendung eine Quittung über den abzubuchenden Betrag unter Hinzufügung eines Authentifikationscodes zertifiziert und an das Terminal zurückschickt, das Terminal die Börsenanwendung darauf das Laden des umzubuchenden Betrages in die Börsenanwendung veranlaßt, die Börsenanwendung einen zweiten Authentifikationscode erstellt und ihn zusammen mit einer Quittung über den geladenen Betrag kryptographisch gesichert an das Terminal zurücksendet, dieses die erste und die zweite erhaltene Quittung prüft und im Gutfall die Gutschrift des gewünschten Betrages bestätigt.

Bei diesem bekannten Verfahren werden die den Zugriff auf die Börsenfunktion ermöglichenden Daten, wenn auch verschlüsselt und mit einem Authentisierungscode signiert, zwischen Karte und Terminal übertragen, so daß hier ein Zugriff auf die Bankdaten grundsätzlich möglich ist. Diesen Zugriff gilt es weiter zu erschweren.

Aus der EP-OS 058 029 ist eine Multifunktionskarte mit Börsenfunktion bekannt. Die hier verwendete Multifunktionskarte unterscheidet mehrere Bankbereiche, einen Kreditkartenbereich und einen Börsenbereich. Dem Benutzer ist es mit Hilfe einer persönlichen Identifikationsnummer (PIN) möglich, zu einem Bank- bzw. Kreditkartenbereich Zugang zu erhalten. Der Benutzer kann nun aus diesem Bereich einen bestimmten Geldbetrag in den Börsenbereich umladen und diesen Betrag dann ohne PIN-Eingabe zur Inanspruchnahme von Dienstleistungen oder Waren nutzen.

Die EP-OS 058 029 enthält keinerlei Angaben darüber, wie der Ladevorgang gegen betrügerische Manipulationen gesichert ist.

Der Ladevorgang einer Börse wird im allgemeinen über eine im Verantwortungsbereich des Börsenanbieters liegende Vorrichtung (Terminal) abgewickelt. Dabei ist die im Verantwortungsbereich der Bank liegende Bankanwendung der Karte zwangsläufig in den Ladeprozeß einbezogen. Eine Kommunikation zwischen den in unterschiedlichen Verantwortungsbereichen liegenden Komponenten des Systems ist somit erforderlich, so daß es im Interesse aller am System beteiligten Institutionen notwendig ist, den gesamten Vorgang fälschungssicher zu gestalten und zu gewährleisten, daß die Integrität der in den einzelnen Komponenten des Systems notwendigen Geheiminformationen gewahrt bleibt.

Die Aufgabe der Erfindung besteht deshalb darin, ein Verfahren und eine zu seiner Durchführung geeignete Vorrichtung anzugeben, die den obengenannten Problemen gerecht werden.

Die Aufgabe der Erfindung wird durch ein Verfahren mit den Merkmalen des Hauptanspruchs gelöst.

Das Wesentliche der Erfindung besteht darin, dem Börsenanbieter ein authentisches Zertifikat über den in die Börse zu ladenden und dem Konto des Börsenanbieters gutzuschreibenden Betrag zur Verfügung zu stellen, ohne daß die zur Erstellung dieses Zertifikats notwendigen geheimen Daten in der Börsenanwendung bzw. im Börsenterminal gespeichert sein müssen.

Dazu wird in einem ersten Schritt des Umbuchungsvorgangs in der Bankanwendung über den vom Kunden gewählten Betrag und weiterer Transaktionsdaten mit nur in der Bankanwendung gespeicherten geheimen Daten ein Zertifikat erstellt, das dann innerhalb des integrierten Schaltkreises an die Börsenanwendung übertragen wird. In der Börsenanwendung wird zu diesem Transaktionszertifikat ein Authentisierungscode errechnet mit geheimen Daten, die ausschließlich in der Börsenanwendung bzw. im Terminal gespeichert sind. Transaktionszertifikat und Authentisierungscode werden zum Terminal übertragen und in diesem verifiziert. Ist der Vergleich positiv, so kann seitens des Börsenterminals davon ausgegangen werden, daß die gesendeten Daten authentisch sind.

In einem zweiten Schritt wird der Empfang echter Daten vom Börsenterminal dadurch bestätigt, daß dieses einen weiteren Authentisierungscode über die empfangenen Daten erstellt und an die Börsenanwendung zurücksendet. In der Börsenanwendung wird dieser zweite Authentisierungscode verifiziert. Ist der Vergleich positiv, kann seitens der Börsenanwendung davon ausgegangen werden, daß das Terminal ein echtes Transaktionszertifikat erhalten hat. Erst nach diesem Vergleich wird der vom Benutzer vorgewählte Betrag endgültig in den Börsenspeicher der Börsenanwendung übertragen. Die Umbuchung ist damit abgeschlossen.

Der Vorteil der Erfindung besteht darin, daß die Integrität der Geheimdaten der an dem Verfahren beteiligten Institutionen gewahrt bleibt. Bei der Implementierung mehrerer Börsenanwendungen in eine Multifunktionskarte sind keine gemeinsamen Schlüssel notwendig, um Beträge von der Bankanwendung in eine Börsenanwendung umzubuchen. Die einzelnen Börsen sind völlig unabhängig voneinander und arbeiten stets mit ihren eigenen Schlüsseln. Das Verfahren stellt sicher, daß das Börsenterminal ein Transaktionszertifikat erhält und dieses auch gültig ist. Erst nach einer entsprechenden Überprüfung wird der vom Benutzer gewählte Betrag in die Börse geladen. Mit dem Verfahren wird gleichzeitig sichergestellt, daß sowohl Terminal als auch Karte authentisch sind.

Vorzugsweise wird in der Bankanwendung vor der Erstellung des Transaktionszertifikats geprüft, ob der vom Kartenbenutzer gewählte Betrag kleiner ist als der in einem sogenannten Verfügungsrahmen gespeicherte Betrag. Der jeweils aktuelle Wert des Verfügungsrahmens stellt die Obergrenze des nutzbaren Geldbetrages dar. Ist der Verfügungsrahmen verbraucht, sind keine weiteren Umbuchungen in eine Börse möglich. Der Verfügungsrahmen kann nur durch eine durch vorherige PIN-Eingabe mögliche Transaktion mit der kontoführenden Bank des Kartenbenutzers wieder geladen werden. Diese Maßnahmen bewahren den Kartenbenutzer bei Verlust der Karte davor, daß zu große Beträge mißbräuchlich in die Börse umgebucht werden, solange die Börsenfunktion ohne vorherige PIN-Prüfung aktivierbar ist.

Gemäß einer Weiterbildung der Erfindung wird vorgeschlagen, in der Bankanwendung einen globalen Transaktionszähler vorzusehen, der alle über die Bankanwendung laufenden Transaktionen zählt. Ein entsprechender Zähler ist für die Börsenanwendung vorgesehen. Nach jedem Umbuchungsvorgang von der Bankanwendung in die Börsenanwendung wird der Zählerstand des Transaktionszählers in der Bankanwendung in den Zählerstand des Transaktionszählers in der Börsenanwendung übertragen. Eine Umbuchung ist nur möglich, wenn der Zählerstand des Transaktionszählers in der Bankanwendung größer ist als der in der Börsenanwendung. Diese Maßnahme hat den Vorteil, daß bei einer gestohlenen Karte nur maximal eine Umbuchung vorgenommen werden kann, da ein zweiter Versuch wegen der Gleichheit der dann vorliegenden Zählerstände abgebrochen wird. Nur durch eine Transaktion mit der kontoführenden Bank, die eine PIN-Eingabe voraussetzt, wird der Transaktionszähler in der Bankanwendung erhöht, womit eine weitere Umbuchung freigegeben wird. Bei einer Karte mit mehreren Börsenanwendungen ist ein allen Börsen gemeinsamer Zähler vorgesehen.

Weitere Vorteile sowie Weiterbildungen der Erfindung sind Gegenstand der Unteransprüche sowie der nachfolgenden Beschreibung einer Ausführungsform der Erfindung, die anhand der Zeichnung beispielsweise beschrieben wird. Darin zeigen:
- Fig. 1: eine schematische Darstellung des Informationsflusses zwischen den einzelnen Komponenten,
- Fig. 2: ein Ablaufdiagramm des Umbuchvorgangs,
- Fig. 3: ein Ablaufdiagramm des Bestätigungsvorganges.

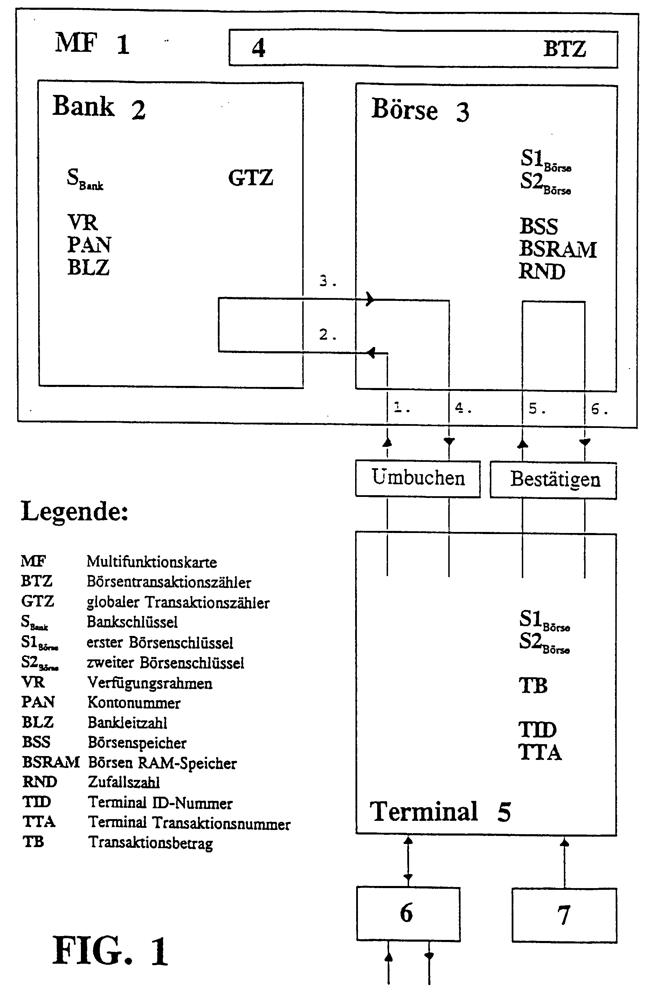

Die Fig. 1 zeigt in einer beispielhaften Ausführungsform die wesentlichen Komponenten des erfindungsgemäßen Systems. Es besteht aus einer Multifunktionskarte 1 (MF) und einem Terminal 5 mit einer Schnittstelle 6 zur Kommunikation mit anderen Einheiten sowie einer Tastatur 7. Die Multifunktionskarte ist in drei Bereiche, den Bankbereich 2, den Börsenbereich 3 und den Systembereich 4 aufgeteilt. Auf den Bank- bzw. Börsenbereich können jeweils nur die dazu authorisierten Anbieter zugreifen. Der Systembereich enthält unter anderem allgemeine Daten, die von mehreren Anwendern genutzt werden können. Im folgenden soll nur auf die in den einzelnen Bereichen gespeicherten Daten und Vorgänge bzw. Programme eingegangen werden, die zum Verständnis der Erfindung notwendig sind.

Der in der Bankanwendung 2 gespeicherte Schlüssel S_{Bank} dient zusammen mit einem geeigneten Algorithmus zur Berechnung des bankspezifischen Zertifikats. Der Schlüssel ist nur der Bank bekannt bzw. nur in der Bankanwendung gespeichert. Ferner ist in der Bankanwendung ein sogenannter Verfügungsrahmen VR gespeichert, der den maximal vom Benutzer verfügbaren Betrag festlegt. Der Verfügungsrahmen ist also einem Betragslimit gleichzusetzen, über das der Benutzer ohne einen Authorisierungsvorgang mit der kontoführenden Bank verfügen kann. Ein aufgebrauchter Verfügungsrahmen kann nur durch einen PIN-gekoppelten und durch die kontoführende Bank authorisierten Prozeß initialisiert werden. Die in der Anwendung noch gespeicherte Kontonummer PAN und die Bankleitzahl BLZ dienen zur Identifikation des Benutzers gegenüber der Bank. Auf den in der Bankanwendung noch vorgesehenen Transaktionszähler GTZ wird später noch eingegangen.

Im Börsenbereich der Karte sind in der hier geschilderten beispielhaften Ausführungsform zwei Schlüssel S1_{Börse} und S2_{Börse} gespeichert, die der Authentisierung der Vorgänge zwischen der Börsenanwendung und dem Terminal dienen. Diese Schlüssel werden vom Börsenanwender ausgewählt bzw. von sogenannten Grundschlüsseln abgeleitet und sind nur dem Börsenanwender bekannt. Ferner enthält die Börsenanwendung wenigstens zwei Speicher BSRAM und BSS. Der RAM-Speicher dient zur vorübergehenden Speicherung des vom Benutzer für eine Umbuchung vorgesehenen Betrags. Erst nach Abschluß aller Authentisierungsvorgänge wird dieser Betrag in den Börsenspeicher transferiert. Schließlich enthält die Börsenanwendung einen Generator zur Erzeugung von Zufallszahlen RND.

Entsprechend der Börsenanwendung sind auch im Terminal die Börsenschlüssel S1_{Börse} und S2_{Börse} gespeichert. Zur Identifikation des Börsenterminals ist eine Terminal-Identifikationsnummer TID vorgesehen. Eine Terminal-Transaktionsnummer TTA wird bei jeder Buchung inkrementiert, so daß damit jeder Buchungsvorgang individualisiert wird. Der vom Benutzer über die Tastatur 7 eingegebene Geld- bzw. Transaktionsbetrag TB wird im Terminal zur weiteren Verarbeitung zwischengespeichert.

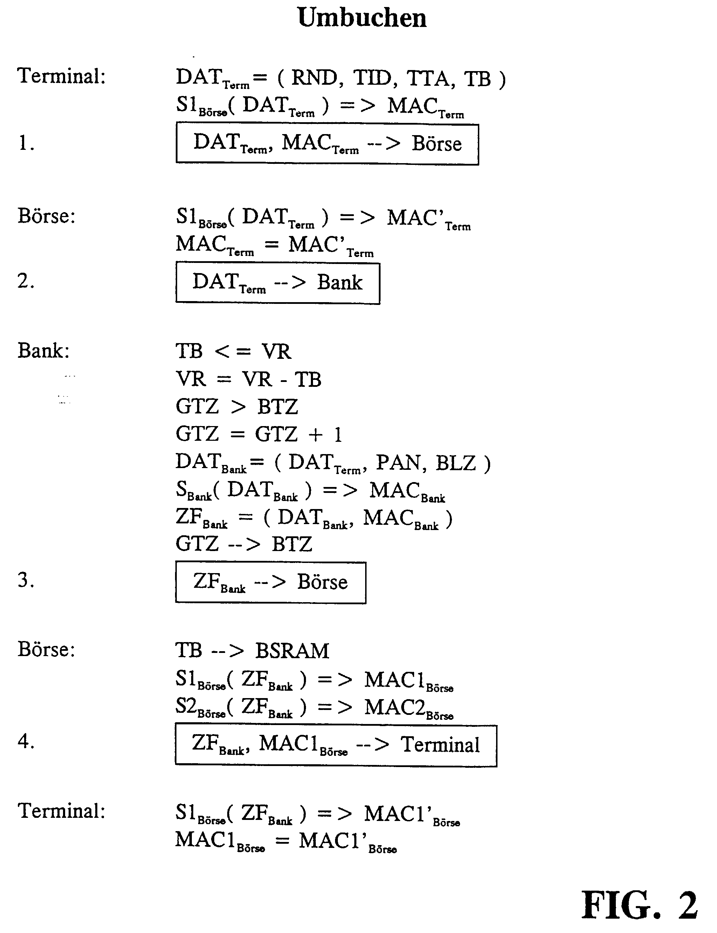

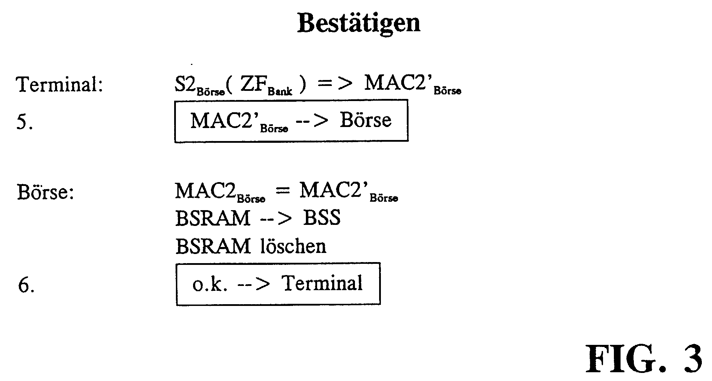

Der eigentliche Umbuchungsvorgang setzt sich aus zwei Kommandos, dem Kommando "Umbuchen" und dem Kommendo "Bestätigen" zusammen. Der Ablauf dieser Kommandos ist in der Fig. 1 anhand von Signalverläufen grob skizziert und soll im folgenden anhand der Fig. 2 und 3 ausführlicher beschrieben werden.

Die Fig. 2 zeigt ein Ablaufdiagramm des Kommandos "Umbuchen". Das Terminal stellt zunächst einen Datensatz DAT_{Term} aus der von der Börsenanwendung der Karte angeforderten Zufallszahl RND, der Terminal-Identifikationsnummer TID, der Terminal-Transaktionsnummer TDA und dem Transaktionsbetrag TB zusammen. Durch die Verarbeitung einer Zufallszahl wird der Datensatz nicht vorhersehbar dynamisiert, was, wie an sich bekannt, gegen sogenannte replay-Angriffe schützt. Der Datensatz DAT_{Term} wird nun mit Hilfe des Börsenschlüssels S1_{Börse} zur Erzeugung eines Echtheitscodes MAC_{Term} verschlüsselt. Der Datensatz DAT_{Term} und der Echtheitscode MAC_{Term} werden daraufhin in einem ersten Schritt des Umbuchungsvorgangs (siehe auch Fig. 1) an die Börsenanwendung übertragen. Diese berechnet jetzt ihrerseits aus dem Datensatz mit Hilfe des Börsenschlüssels S1_{Börse} den Sicherheitscode MAC'_{Term}. Danach vergleicht die Börsenanwendung den errechneten Echtheitscode mit dem vom Terminal übermittelten Echtheitscode. Fällt dieser Vergleich negativ aus, wird hier, wie auch bei allen späteren Vergleichen, der Umbuchungsvorgang abgebrochen. Bei positivem Vergleich wird der Datensatz DAT_{Term} an die Bankanwendung übertragen. Hierbei handelt es sich zwar um einen anwendungsübergreifenden Prozeß, der jedoch ohne eine Absicherung durchgeführt werden kann, da er innerhalb des integrierten Schaltkreises durchgeführt wird. Für einen Falscher bestehen auf dieser Ebene praktisch keine Zugriffsmöglichkeiten.

In der Bankanwendung wird nun zunächst geprüft, ob der Transaktionsbetrag TB kleiner ist als der durch den Verfügungsrahmen VR definierte Betrag. Bei positivem Vergleich wird der Transaktionsbetrag TB vom Verfügungsrahmen VR abgezogen. Daraufhin wird in der Bankanwendung überprüft, ob der Stand des globalen Transaktionszählers GTZ größer ist als der eines Börsentransaktionszählers BTZ, der, wie aus der Fig. 1 ersichtlich, im Systembereich der Multifunktionskarte gespeichert ist (BTZ). Wie schon erwähnt, wird nach jedem Umbuchungsvorgang von der Bankanwendung in die Börsenanwendung der Zählerstand des globalen Transaktionszählers GTZ in den Transaktionszähler der Börsenanwendung BTZ übertragen. Eine Umbuchung ist nur möglich, wenn der Zählerstand des Zählers GTZ größer ist als der des Zählers BTZ. Diese Maßnahme bewirkt, daß bei einer gestohlenen Karte nur maximal eine Umbuchung vorgenommen werden kann. Nur durch eine Transaktion mit der kontoführenden Bank, die eine PIN-Eingabe voraussetzt, wird der Transaktionszähler GTZ in der Bankanwendung erhöht, womit eine weitere Umbuchung freigegeben wird. Sollen mehr als eine Umbuchung nach einer Transaktion mit der kontoführenden Bank möglich sein, sind entsprechende Zählerstände der genannten Zähler GTZ und BTZ bei einem Vergleich zu berücksichtigen.

Ergibt der Vergleich zwischen dem Transaktionszähler GTZ und dem Börsentransaktionszähler BTZ, daß eine Umbuchung möglich ist, wird der globale Transaktionszähler GTZ inkrementiert und der aktuelle Zählerstand des globalen Transaktionszählers GTZ in den Börsentransaktionszähler BTZ übertragen. Daraufhin wird in der Bankanwendung dem Datensatz DAT_{Term} die Kontonummer PAN und die Bankleitzahl BLZ hinzugefügt. Mit Hilfe des Schlüssels S_{Bank} wird aus dem Datensatz DAT_{Bank} der Echtheitscode MAC_{Bank} berechnet. Aus dem Datensatz DAT_{Bank} und dem Echtheitscode MAC_{Bank} wird das Zertifikat ZF_{Bank} erstellt. Dieses Zertifikat wird im dritten Schritt des Umbuchungsvorgangs an die Börsenanwendung übertragen.

In der Börsenanwendung wird nun zunächst der Transaktionsbetrag TB in den RAM-Speicher BSRAM übertragen. Daraufhin werden mit Hilfe der Schlüssel S1_{Börse} und S2_{Börse} die Echtheitscodes MAC1_{Börse} und MAC2_{Börse} aus dem Zertifikat ZF_{Bank} berechnet. Schließlich wird im vierten Schritt des Umbuchungsvorgangs das Zertifikat ZF_{Bank} mit dem Echtheitscode MAC1_{Börse} an das Terminal übertragen.

Das Terminal berechnet jetzt seinerseits mit Hilfe des Schlüssels S1_{Börse} den Sicherheitscode MAC1'_{Börse} aus dem Zertifikat ZF_{Bank} und vergleicht die Echtheitscodes MAC1_{Börse} und MAC1'_{Börse}. Ein positiver Vergleich bedeutet, daß das Zertifikat von einer authorisierten Börsenanwendung an das Terminal übertragen worden ist. Damit ist der Vorgang des Kommandos "Umbuchen" abgeschlossen.

Das Kommando "Bestätigen" wird, wie aus Fig. 3 ersichtlich, dadurch eingeleitet, daß im Terminal mit Hilfe des Schlüssels S2_{Börse} der Echtheitscode MAC2'_{Börse} aus dem Zertifikat ZF_{Bank} berechnet und an die Börsenanwendung übertragen wird.

In der Börsenanwendung wird der hier gespeicherte Echtheitscode MAC2_{Börse} mit dem gesendeten Echtheitscode MAC2'_{Börse} verglichen. Bei positivem Vergleich wird der Inhalt des RAM-Speichers in den Börsenspeicher BSS übertragen. Aufgrund des positiven Vergleichs ist seitens der Börsenanwendung sichergestellt, daß das Terminal ein authentisches Bankzertifikat erhalten und verarbeitet hat. In einem letzten Schritt wird der RAM-Speicher gelöscht und ein entsprechendes Signal über den erfolgreich durchgeführten Umbuchungsvorgang an das Terminal zurückgesendet.

Das Bankzertifikat ZF_{Bank} kann beispielsweise über die Schnittstelle 6 an die entsprechende Bank übertragen werden. Es ist auch möglich, mehrere Zertifikate im Terminal zu speichern und in bestimmten Abständen an die entsprechende Bank zu übertragen. Die Maßnahmen zur Absicherung derartiger Übertragungen sind bekannt, so daß darauf an dieser Stelle nicht näher eingegangen werden muß. Die Bank ist in der Lage, anhand des Bankschlüssels S_{Bank} das Zertifikat ZF_{Bank} auf Authentizität zu prüfen, um dann bei entsprechend positivem Vergleich anhand der im Zertifikat ZF_{Bank} übertragenen Daten den entsprechenden Betrag vom Konto des Kartenbenutzers auf das Konto des Börsenanbieters zu überweisen.

## Patentansprüche

1. Verfahren zur Durchführung von Geldtransaktionen auf einer Multifunktionskarte mit einem integriertem Schaltkreis, der eine der kontoführenden Bank eines Benutzers zugeordnete Bankanwendung sowie wenigstens eine einem Dienstleistungsanbieter oder Händler zugeordnete Börsenanwendung enthält, mit Hilfe einer Vorrichtung, über die ein wählbarer Geldbetrag in die Börsenanwendung geladen werden kann, indem den Geldbetrag enthaltende Transaktionsdaten von der Vorrichtung an die Karte übertragen und innerhalb des integrierten Schaltkreises der Karte von der Bankanwendung in die Börsenanwendung umgeladen werden, wobei
von den von der Vorrichtung übertragenen Transaktionsdaten innerhalb der Bankanwendung ein Transaktionszertifikat unter Verwendung geheimer, nur der Bank bekannter bzw. in der Bankanwendung gespeicherter Daten erstellt wird,
das Transaktionszertifikat in die Börsenanwendung übertragen wird,
die Börsenanwendung das Transaktionszertifikat authentisiert,
das authentisierte Transaktionszertifikat an die Vorrichtung übertragen wird,
und der umzubuchende Geldbetrag erst dann in die Börsenanwendung geladen wird, wenn die Vorrichtung den Empfang des durch die Börsenanwendung authentisierten Transaktionszertifikates gegenüber der Börsenanwendung bestätigt.

2. Verfahren nach Anspruch 1, dadurch **gekennzeichnet,** daß das von der Börsenanwendung zur Vorrichtung übertragene Transaktionszertifikat sowie die Bestätigung der Vorrichtung über den Erhalt des Transaktionszertifikats durch geheime, nur dem Dienstleistungsanbieter oder Händler bekannte und in der Börsenanwendung sowie in der Vorrichtung gespeicherte Daten authentisiert werden.

3. Verfahren nach Anspruch 2, dadurch **gekennzeichnet,** daß zur Authentisierung des Transaktionszertifikats in der Börsenanwendung mit Hilfe eines ersten Börsenschlüssels ein Authentisierungscode berechnet, der Authentisierungscode zusammen mit dem Transaktionszertifikat zur Vorrichtung übertragen und der Authentisierungscode in der Vorrichtung mit Hilfe des ersten Börsenschlüssels verifiziert wird.

4. Verfahren nach Anspruch 3, dadurch **gekennzeichnet,** daß in der Vorrichtung mit Hilfe eines zweiten Börsenschlüssels aus dem Transaktionszertifikat ein zweiter Authentisierungscode berechnet, dieser Authentisierungscode zur Börsenanwendung übertragen und in der Börsenanwendung verifiziert wird.

5. Verfahren nach Anspruch 1, dadurch **gekennzeichnet,** daß vor der Übertragung der Transaktionsdaten von der Vorrichtung an die Börsenanwendung in der Vorrichtung ein Authentisierungscode gebildet, gemeinsam mit den Transaktionsdaten an die Börsenanwendung übertragen und in dieser verifiziert wird.

6. Verfahren nach Anspruch 1, dadurch **gekennzeichnet,** daß vor der Bildung des Transaktionszertifikats in der Bankanwendung geprüft wird, ob der umzubuchende Geldbetrag innerhalb eines in der Bankanwendung definierten Verfügungsrahmens liegt.

7. Verfahren nach Anspruch 1 oder 6, dadurch **gekennzeichnet**, daß vor der Bildung des Transaktionszertifikats in der Bankanwendung festgestellt wird, ob die Anzahl der mit der Karte durchgeführten Umbuchungen einen einstellbaren Wert überschreitet.

8. Vorrichtung zur Durchführung eines Verfahrens nach Anspruch 1, mit
einer Multifunktionskarte (MF1) mit integriertem Schaltkreis, welcher eine der kontoführenden Bank eines Benutzers zugeordnete Bankanwendung (2) sowie wenigstens eine einem Dienstleistungsanbieter zugeordnete Börsenanwendung (3) enthält,
sowie einer Vorrichtung (5), welche das Laden eines wählbaren Geldbetrages in die Börsenanwendung (3) ermöglicht, wobei zwischen Vorrichtung (5) und Börsenanwendung (3) sowie zwischen Börsenanwendung (3) und Bankanwendung (2) eine bidirektionale Datenverbindung besteht,
wobei in der Börsenanwendung (3) wenigstens ein Schlüssel (S1_{Börse}) zur Authentisierung von von der Bankanwendung (2) erhaltenen Daten (ZF_{Bank}) gespeichert und wobei derselbe Schlüssel (S1_{Börse})zur Bestätigung einer Authentisierung in der Vorrichtung (5) gespeichert ist.

## Claims

1. A method for conducting money transactions on a multifunctional card having an integrated circuit which contains a bank application associated with a user's account-keeping bank and at least one purse application associated with a service provider or dealer; with the aid of an apparatus for loading a selectable sum of money into the purse application in that transaction data containing the sum of money are transmitted from the apparatus to the card and transferred from the bank application to the purse application within the integrated circuit of the card, whereby
a transaction certificate is prepared within the bank application from the transaction data transmitted from the apparatus, using secret data known only to the bank or stored in the bank application,
the transaction certificate is transmitted to the purse application,
the purse application authenticates the transaction certificate,
the authenticated transaction certificate is transmitted to the apparatus, and
the sum of money to be transferred is loaded into the purse application only when the apparatus confirms to the purse application the reception of the transaction certificate authenticated by the purse application.

2. The method of claim 1, characterized in that the transaction certificate transmitted from the purse application to the apparatus and the latter's confirmation of reception of the transaction certificate are authenticated by secret data known only to the service provider or dealer and stored in the purse application and in the apparatus

3. The method of claim 2, characterized in that an authenticating code is calculated for authenticating the transaction certificate in the purse application with the aid of a first purse code, the authenticating code is transmitted together with the transaction certificate to the apparatus and the authenticating code is verified in the apparatus with the aid of the first purse code.

4. The method of claim 3, characterized in that a second authenticating code is calculated from the transaction certificate with the aid of a second purse code in the apparatus, and said authenticating code is transmitted to the purse application and verified in the purse application.

5. The method of claim 1, characterized in that before the transaction data are transmitted from the apparatus to the purse application an authenticating code is formed in the apparatus, transmitted together with the transaction data to the purse application and verified in the latter.

6. The method of claim 1, characterized in that before the transaction certificate is formed the bank application checks whether the sum of money to be transferred is within a disposal limit defined in the bank application.

7. The method of claim 1 or 6, characterized in that before the transaction certificate is formed the bank application ascertains whether the number of transfers performed with the card exceeds an adjustable value.

8. An apparatus for carrying out the method of claim 1, having
a multifunctional card (MF1) with an integrated circuit containing a bank application (2) associated with a user's account-keeping bank and at least one purse application (3) associated with a service provider, and
an apparatus (5) for loading a selectable sum of money into the purse application (3), a bidirectional data connection existing between apparatus (5) and purse application (3) and between purse application (3) and bank application (2), whereby at least one code (S1_{Purse}) for authenticating data (ZF_{Bank}) obtained from the bank application (2) is stored in the purse application (3), and the same code (S1_{Purse}) is stored for confirming an authcntication in the apparatus (5).

## Revendications

1. Procédé pour effectuer des transactions monétaires avec une carte multifonctions comportant un circuit intégré, qui comprend une application bancaire affectée à une banque qui gère le compte d'un utilisateur, ainsi qu'au moins une application porte-monnaie affectée à un prestataire de services ou à un négociant, avec le concours d'un dispositif au moyen duquel une somme d'argent choisie peut être chargée dans l'application porte-monnaie, dans lequel les données de la transaction contenant la somme d'argent sont transmises du dispositif dans la carte, et à l'intérieur du circuit intégré de la carte sont transférées de l'application bancaire vers l'application porte-monnaie, dans lequel
un certificat de transaction est établi à partir des données de transaction transmises du dispositif dans l'application bancaire en utilisant des données confidentielles connues seulement de la banque ou stockées dans l'application bancaire,
le certificat de transaction est transféré dans l'application porte-monnaie, l'application porte-monnaie authentifie le certificat de transaction, le certificat de transaction authentifié est transmis au dispositif,
et la somme d'argent à transférer n'est chargée dans l'application porte-monnaie que lorsque le dispositif a accusé réception à l'égard de l'application porte-monnaie du certificat de transaction authentifié par l'application porte-monnaie.

2. Procédé selon la revendication 1, caractérisé en ce que le certificat de transaction transféré de l'application porte-monnaie au dispositif ainsi que la confirmation du dispositif quant à la réception du certificat de transaction sont authentifiés au moyen de données confidentielles connues seulement du prestataire de services ou du commerçant et stockées dans l'application porte-monnaie et également dans le dispositif.

3. Procédé selon la revendication 2, caractérisé en ce que, pour l'authentification du certificat de transaction dans l'application porte-monnaie, on introduit au moyen d'une première clé de porte-monnaie un code d'authentification, on transmet ce code d'authentification en même temps que le certificat de transaction au dispositif, et on vérifie le code d'authentification dans le dispositif au moyen de la première clé de porte-monnaie.

4. Procédé selon la revendication 3, caractérisé en ce qu'on introduit dans le dispositif un deuxième code d'authentification au moyen d'une deuxième clé de porte-monnaie à partir du certificat de transaction, on transmet ce code d'authentification à l'application porte-monnaie et on le vérifie dans l'application porte-monnaie.

5. Procédé selon la revendication 1, caractérisé en ce que, avant le transfert des données de transaction du dispositif vers l'application porte-monnaie, on forme dans le dispositif un code d'authentification, on le transfère en même temps que les données de transaction à l'application porte-monnaie et on le vérifie dans cette dernière.

6. Procédé selon la revendication 1, caractérisé en ce que, avant l'établissement du certificat de transaction, on vérifie dans l'application bancaire si la somme d'argent à virer se trouve à l'intérieur d'un cadre de disponibilité défini dans l'application bancaire.

7. Procédé selon la revendication 1 ou 6, caractérisé en ce que, avant l'établissement du certificat de transaction, on vérifie si le montant du virement effectué avec la carte dépasse une valeur fixée.

8. Dispositif pour la mise en oeuvre d'un procédé selon la revendication 1, comportant
une carte multifonctions (MF1) avec un circuit intégré, qui comprend une application bancaire (2) affectée à une banque qui gère le compte d'un utilisateur, ainsi qu'au moins une application porte-monnaie (3)affectée à un prestataire de services,
ainsi qu'un dispositif (5) qui permet le chargement d'une somme d'argent choisie dans l'application porte-monnaie, une liaison bidirectionnelle de données existant entre le dispositif (5) et l'application porte-monnaie (3) ainsi qu'entre l'application porte-monnaie (3) et l'application bancaire (2), dans lequel
au moins une clé (S1_{Börse}) est stockée dans l'application porte-monnaie (3) pour l'authentification des données (ZF_{Bank}) reçues de l'application bancaire (2) et cette même clé (S1_{Börse}) est stockée dans le dispositif (5) pour confirmation d'une authentification.
